# EUROPEAN PATENT APPLICATION

(11) **EP 4 715 579 A1**
(43) Date of publication of application: **25.03.2026**
(21) Application number: 23941398.2
(22) Date of filing: 18.12.2023
(51) Int. Cl.: G06F 8/65

(54) **CODE HOT REPLACEMENT METHOD AND APPARATUS**

(30) Priority: 14.06.2023 RU 2023115475
(71) Applicant: Huawei Cloud Computing Technologies Co., Ltd., Guiyang, Guizhou, 550025 (CN)
(72) Inventor: WANG, Yawei, Guiyang, Guizhou 550025 (CN); IVANOV, Ilya, Guiyang, Guizhou 550025 (CN); PETROCHENKO, Pavel, Guiyang, Guizhou 550025 (CN)
(74) Representative: Maiwald GmbH
(86) International application number: PCT/CN2023/139479
(87) International publication number: WO 2024/255178

(57) **Abstract**

This application provides a hot code replace method and apparatus. The method includes: obtaining a first bytecode obtained by compiling source code and a second bytecode obtained by performing incremental compilation on the source code after modification; transferring, to a third bytecode, a declaration of first-type modification content in modification content in the second bytecode relative to the first bytecode, where the first-type modification content includes a modification other than a modification of a method body; patching at least one instruction in the second bytecode after transfer or the third bytecode, where the at least one instruction is used to invoke at least one piece of content in the second bytecode, and the at least one patched instruction is used to invoke content that is in the third bytecode and that corresponds to the at least one piece of content; and loading a target second bytecode and a target third bytecode. Solutions in embodiments of this application help improve debugging efficiency.

## Description

This application claims priority to Russian Patent Application No. 2023115475, filed with the Russian Federal Service for Intellectual Property on June 14, 2023 and entitled "HOT CODE REPLACE METHOD AND APPARATUS", which is incorporated herein by reference in its entirety.

### TECHNICAL FIELD

This application relates to the field of debugging technologies, and more specifically, to a hot code replace method and apparatus.

### BACKGROUND

When software cannot work as expected, a user may analyze code by using a debugging tool, to determine a cause of the error. When the debugging tool is used, a running process of the software usually needs to be repeatedly stopped and restarted, to modify the code and verify a running result. However, startup of some software may take a long time, which affects debugging efficiency. For example, large-scale software usually has features such as a complex hierarchy and a large quantity of components, and usually requires a plurality of sub-applications to be started during startup, which is time-consuming, greatly increases time costs, and affects debugging efficiency.

A related solution provides some hot code replace manners, to support hot replace for a modification inside a method body. This solution can apply the modification inside the method body instantly without restarting an entire application, so that time costs of debugging can be reduced. However, this solution is only applicable to modification of the method body, and cannot support another modification manner.

Therefore, how to improve debugging efficiency becomes an urgent problem to be resolved.

### SUMMARY

This application provides a hot code replace method and apparatus, to help improve debugging efficiency.

According to a first aspect, a hot code replace method is provided. The method includes: obtaining a first bytecode and a second bytecode, where the first bytecode is a bytecode obtained by compiling source code, and the second bytecode is obtained by performing incremental compilation on the source code after modification; transferring, to a third bytecode, a declaration of first-type modification content in modification content in the second bytecode relative to the first bytecode, where the first-type modification content includes modification content other than a modification of a method body; patching at least one instruction in the second bytecode after transfer or the third bytecode, where the at least one instruction is used to invoke at least one piece of content in the second bytecode, and the at least one patched instruction is used to invoke content that is in the third bytecode and that corresponds to the at least one piece of content; and loading a target second bytecode and a target third bytecode, where a part or all of the at least one instruction belongs to the second bytecode after transfer, and the target second bytecode is obtained by patching the part or all of the at least one instruction in the second bytecode after transfer; and when a part of the at least one instruction belongs to the third bytecode, the target third bytecode is obtained by patching the part of the at least one instruction in the third bytecode; or when the at least one instruction does not belong to the third bytecode, the target third bytecode is the third bytecode.

According to the solution in this embodiment of this application, incremental compilation is performed on modification content of the code to obtain the second bytecode, and the third bytecode is dynamically generated for the second bytecode, in other words, the third bytecode is generated during running; and the target second bytecode and the target third bytecode are loaded to replace the first bytecode, to implement hot code replace. This helps avoid repeated full compilation caused by modification of the code in a debugging process, and helps avoid restarting an entire application, thereby reducing time costs of debugging and improving debugging efficiency. In addition, in the solution in this embodiment of this application, hot code replace for the modification of the method body may be reused, to help reduce costs.

For example, content that is in the third bytecode and that corresponds to content in the second bytecode may be content that is in the third bytecode and that has a same name as the content in the second bytecode. For example, the content may be a method.

For example, content that is in the third bytecode and that corresponds to content in the second bytecode may be content that is in the third bytecode and that has a same value as the content in the second bytecode. For example, the content may be a field value.

With reference to the first aspect, in some implementations of the first aspect, the source code is Java source code, and the first-type modification content includes at least one of the following: an added method, a method with a modified signature, a method with a modifier added, a method with a modifier deleted, an added lambda expression, a lambda expression with a modified body, an added inner anonymous class, or a modified inner anonymous class.

For example, modifying a signature of a method includes modifying at least one of the following: a parameter of the method, a type of the parameter of the method, a return value of the method, or a type of the return value of the method.

For example, the modifier may include at least one of the following: a "static (static)" modifier or a "synchronized (synchronized)" modifier.

With reference to the first aspect, in some implementations of the first aspect, the at least one instruction includes a first instruction, the at least one piece of content includes first content, the first content belongs to the first-type modification content, the first instruction is used to invoke the first content in the second bytecode, and the patched first instruction is used to invoke the first content in the third bytecode.

For example, the first instruction may include a dynamic invocation instruction or a common invocation instruction.

In the solution in this embodiment of this application, after the third bytecode is generated, a related invocation instruction is patched, so that the patched instruction can normally invoke content that has been transferred to the third bytecode.

With reference to the first aspect, in some implementations of the first aspect, the at least one instruction includes a second instruction, the second instruction belongs to the third bytecode, the at least one piece of content includes a first field value, and the second instruction is used to invoke the first field value in the second bytecode; and patching the at least one instruction in the second bytecode after transfer or the third bytecode includes: generating a first method and a second method in the third bytecode, where the first method is used to access the first field value in the second bytecode after transfer by using a reflection mechanism, and the second method is used to read the first field value; and patching the second instruction, so that the patched second instruction is used to invoke the second method.

In the solution in this embodiment of this application, after the third bytecode is generated, a related field value invocation instruction is patched, so that the patched instruction can normally invoke a member value in the second bytecode.

With reference to the first aspect, in some implementations of the first aspect, the first-type modification content includes a third method with a modifier added or a third method with a modifier deleted, the modifier is a static modifier, a modifier of the third method in the target second bytecode is the same as a modifier of the third method in the first bytecode, and a method body of the third method in the target second bytecode indicates to invoke the third method in the third bytecode.

With reference to the first aspect, in some implementations of the first aspect, the first-type modification content includes a fourth method with a modifier added, and the modifier is a synchronized modifier; and transferring, to the third bytecode, the declaration of the first-type modification content in the modification content in the second bytecode relative to the first bytecode includes: transferring a declaration of the unsynchronized fourth method to the third bytecode, where a modifier of the fourth method in the target second bytecode includes the synchronized modifier, a method body of the fourth method in the target second bytecode indicates to invoke the synchronized fourth method in the third bytecode, and the synchronized fourth method is implemented based on a synchronization tool.

With reference to the first aspect, in some implementations of the first aspect, the first-type modification content includes a fifth method with a modifier deleted, the modifier is a synchronized modifier, a modifier of the fifth method in the target second bytecode does not include the synchronized modifier, and a method body of the fifth method in the target second bytecode indicates to invoke the fifth method in the third bytecode.

With reference to the first aspect, in some implementations of the first aspect, the first-type modification content includes a sixth method with a modified signature, a signature of the sixth method in the target second bytecode is the same as a signature of the sixth method in the first bytecode, and a method body of the sixth method in the target second bytecode indicates to throw an unsupported exception.

With reference to the first aspect, in some implementations of the first aspect, the source code is the Java source code, an instruction in second-type modification content in the target second bytecode indicates to throw an unsupported exception, and the second-type modification content includes at least one of the following: a deleted method, a deleted lambda expression, or a deleted inner anonymous class.

For example, when a seventh method is deleted from the second bytecode relative to the first bytecode, the method further includes: restoring the seventh method in the second bytecode or the second bytecode after transfer, and modifying a method body of the seventh method, so that the modified method body indicates to throw an unsupported exception.

According to a second aspect, a hot code replace apparatus is provided. The apparatus includes: an obtaining module, configured to obtain a first bytecode and a second bytecode, where the first bytecode is a bytecode obtained by compiling source code, and the second bytecode is obtained by performing incremental compilation on the source code after modification; a generation module, configured to transfer, to a third bytecode, a declaration of first-type modification content in modification content in the second bytecode relative to the first bytecode, where the first-type modification content includes modification content other than a modification of a method body; a patching module, configured to patch at least one instruction in the second bytecode after transfer or the third bytecode, where the at least one instruction is used to invoke at least one piece of content in the second bytecode, and the at least one patched instruction is used to invoke content that is in the third bytecode and that corresponds to the at least one piece of content; and a loading module, configured to load a target second bytecode and a target third bytecode, where a part or all of the at least one instruction belongs to the second bytecode after transfer, and the target second bytecode is obtained by patching the part or all of the at least one instruction in the modified second bytecode; and when a part of the at least one instruction belongs to the third bytecode, the target third bytecode is obtained by patching the part of the at least one instruction in the third bytecode; or when the at least one instruction does not belong to the third bytecode, the target third bytecode is the third bytecode.

With reference to the second aspect, in some implementations of the second aspect, the source code is Java source code, and the first-type modification content includes at least one of the following: an added method, a method with a modified signature, a method with a modifier added, a method with a modifier deleted, an added lambda expression, a lambda expression with a modified body, an added inner anonymous class, or a modified inner anonymous class.

With reference to the second aspect, in some implementations of the second aspect, the at least one instruction includes a first instruction, the at least one piece of content includes first content, the first content belongs to the first-type modification content, the first instruction is used to invoke the first content in the second bytecode, and the patched first instruction is used to invoke the first content in the third bytecode.

With reference to the second aspect, in some implementations of the second aspect, the at least one instruction includes a second instruction, the second instruction belongs to the third bytecode, the at least one piece of content includes a first field value, and the second instruction is used to invoke the first field value in the second bytecode; and the patching module is specifically configured to: generate a first method and a second method in the third bytecode, where the first method is used to access the first field value in the second bytecode after transfer by using a reflection mechanism, and the second method is used to read the first field value; and patch the second instruction, so that the patched second instruction is used to invoke the second method.

With reference to the second aspect, in some implementations of the second aspect, the first-type modification content includes a third method with a modifier added or a third method with a modifier deleted, the modifier is a static modifier, a modifier of the third method in the target second bytecode is the same as a modifier of the third method in the first bytecode, and a method body of the third method in the target second bytecode indicates to invoke the third method in the third bytecode.

With reference to the second aspect, in some implementations of the second aspect, the first-type modification content includes a fourth method with a modifier added, and the modifier is a synchronized modifier; and the generation module is specifically configured to: transfer a declaration of the unsynchronized fourth method to the third bytecode, where a modifier of the fourth method in the target second bytecode includes the synchronized modifier, a method body of the fourth method in the target second bytecode indicates to invoke the synchronized fourth method in the third bytecode, and the synchronized fourth method is implemented based on a synchronization tool.

With reference to the second aspect, in some implementations of the second aspect, the first-type modification content includes a fifth method with a modifier deleted, the modifier is a synchronized modifier, a modifier of the fifth method in the target second bytecode does not include the synchronized modifier, and a method body of the fifth method in the target second bytecode indicates to invoke the fifth method in the third bytecode.

With reference to the second aspect, in some implementations of the second aspect, the first-type modification content includes a sixth method with a modified signature, a signature of the sixth method in the target second bytecode is the same as a signature of the sixth method in the first bytecode, and a method body of the sixth method in the target second bytecode indicates to throw an unsupported exception.

With reference to the second aspect, in some implementations of the second aspect, the source code is the Java source code, an instruction in second-type modification content in the target second bytecode indicates to throw an unsupported exception, and the second-type modification content includes at least one of the following: a deleted method, a deleted lambda expression, or a deleted inner anonymous class.

It should be understood that extensions, definitions, explanations, and descriptions of related content in the first aspect are also applicable to same content in the second aspect.

According to a third aspect, a computing device cluster is provided. The computing device cluster includes at least one computing device, and each computing device includes a processor and a memory. A processor of the at least one computing device is configured to execute instructions stored in a memory of the at least one computing device, to enable the computing device cluster to perform the method in any one of the first aspect and the implementations of the first aspect.

According to a fourth aspect, a computer-readable medium is provided. The computer-readable medium includes computer program instructions. When the computer program instructions are executed by a computing device cluster, the computing device cluster performs the method in any one of the first aspect and the implementations of the first aspect.

According to a fifth aspect, a computer program product including instructions is provided. When the instructions are run by a computing device cluster, the computing device cluster is enabled to perform the method in any one of the first aspect and the implementations of the first aspect.

### BRIEF DESCRIPTION OF DRAWINGS

FIG. 1 is a schematic flowchart of a hot code replace method according to an embodiment of this application;
FIG. 2 is a diagram of a relationship between three classes according to an embodiment of this application;
FIG. 3 is a diagram of a partial procedure of hot code replace according to an embodiment of this application;
FIG. 4 is a diagram of a satellite class loading process according to an embodiment of this application;
FIG. 5 is a block diagram of a hot code replace apparatus according to an embodiment of this application;
FIG. 6 is a block diagram of a computing device according to an embodiment of this application;
FIG. 7 is a block diagram of a computing device cluster according to an embodiment of this application; and
FIG. 8 is a block diagram of another computing device cluster according to an embodiment of this application.

### DESCRIPTION OF EMBODIMENTS

The following describes technical solutions of this application with reference to accompanying drawings.

To help persons skilled in the art better understand the technical solutions of this application, the following first describes some terms that may be used in embodiments of this application.

### 1. Integrated development environment (integrated development environment, IDE):

The IDE is an application that provides a program development environment, usually includes tools such as a code editor, a compiler, a debugger, and a graphical user interface, and is a software development service suite that integrates code writing, analysis, compilation, debugging, and other functions.

The IDE may include a local IDE and a web (web) IDE. The local IDE may also be referred to as a desktop IDE. The local IDE is installed in a local development operating environment of a user. For example, the local development operating environment may be a terminal device, such as a desktop computer, a laptop computer, or a mobile phone. The web IDE refers to an online IDE service, including an IDE front end and an IDE back end. The IDE back end runs in a remote environment. For example, the remote environment may be a cloud server.

### (2) Hot code replace (hot code replace, HCR):

The HCR refers to modifying code of an application during running of the application, and applying the modification instantly without restarting the application. A Java application is used as an example, and the HCR refers to updating a Java class file when the application runs.

A computer program is an abstract and conceptual activity that abstracts data information by using a programming language, so that a user can effectively interact with a computer. A plurality of abstraction layers and a plurality of components in a software program communicate with each other, so that the program works normally. If the software program does not work as expected, code needs to be analyzed to determine a cause of the error. Debugging is a process of searching for and fixing errors in source code of a software program. Large-scale software programs, for example, most server-side applications, are based on complex programming frameworks, each with a complex hierarchy and a large quantity of components. Therefore, when an error occurs, it may be difficult to find and resolve a problem thereof.

A user may use a debugging tool to run the software program in a controlled environment, check code step by step, and analyze and fix the problem. Using the debugging tool for debugging helps quickly resolve the problem and improve work efficiency of the user.

Performance of the debugging tool significantly affects quality of the software program and user experience. When the debugging tool is used for debugging, usually, the running program needs to be repeatedly stopped, and running of the program needs to be repeatedly restarted, to modify the code and verify a running result of the program. The large-scale software program usually requires a plurality of sub-applications to be started, which is time-consuming. Consequently, repeated starting and stopping severely affect debugging efficiency.

A related solution provides some hot code replace manners, to perform hot replace on a modification inside a method body based on a hotswap (hotswap) capability of a standard Java virtual machine (Java virtual machine, JVM). This solution can apply the modification inside the method body instantly without restarting an entire application. However, this solution is only applicable to modification of the method body, and cannot support another modification manner. Therefore, functionality is very limited.

In view of this, embodiments of this application provide a hot code replace method, to support hot replace for complex code modification, and help improve debugging efficiency.

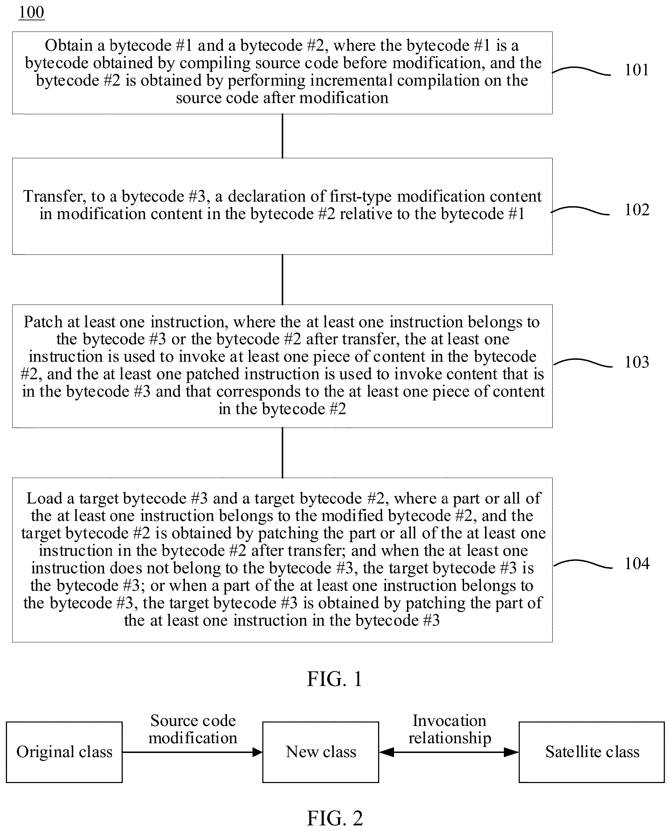

FIG. 1 is a diagram of a hot code replace method according to an embodiment of this application.

As shown in FIG. 1, the method 100 includes the following steps.

101: Obtain a bytecode #1 (an example of a first bytecode) and a bytecode #2 (an example of a second bytecode). The bytecode #1 is a bytecode obtained by compiling source code before modification, and the bytecode #2 is obtained by performing incremental compilation on the source code after modification.

The source code before modification may also be referred to as original code. The bytecode #1 may also be referred to as an original bytecode.

102: Transfer, to a bytecode #3 (an example of a third bytecode), a declaration of first-type modification content in modification content in the bytecode #2 relative to the bytecode #1.

The first-type modification content includes a modification other than a modification of a method body.

A method may also be referred to as a function. A method body in a method may also be referred to as a function body.

103: Patch at least one instruction. The at least one instruction belongs to the bytecode #3 or the bytecode #2 after transfer. The at least one instruction is used to invoke at least one piece of content in the bytecode #2, and the at least one patched instruction is used to invoke content that is in the bytecode #3 and that corresponds to the at least one piece of content in the bytecode #2.

The at least one instruction may be referred to as a to-be-patched instruction. The to-be-patched instruction may be located in the bytecode #2 after transfer, and may also be located in the bytecode #3. In other words, the at least one instruction may belong to a same bytecode file, or may belong to different bytecode files.

For example, the at least one instruction may be all located in the bytecode #2 after transfer. For another example, the at least one instruction includes a plurality of to-be-patched instructions, a part of the plurality of to-be-patched instructions is located in the bytecode #2 after transfer, and the other part is located in the bytecode #3.

In a possible example, content that is in the bytecode #3 and that corresponds to content in the bytecode #2 may be content that is in the bytecode #3 and that has a same name as the content in the bytecode #2. For example, the content may be a method.

For example, the at least one instruction includes an instruction #1 (an example of a first instruction). The instruction #1 is used to invoke a method #B in the bytecode #2, and the patched instruction #1 is used to invoke a method #B in the bytecode #3. The method #B in the bytecode #3 has a same name as the method #B in the bytecode #2.

In a possible example, content that is in the bytecode #3 and that corresponds to the content in the bytecode #2 may be content that is in the bytecode #3 and that has a same value as the content in the bytecode #2. For example, the content may be a field value.

For example, the at least one instruction includes an instruction #2 (an example of a second instruction). The instruction #2 is used to invoke a field value #A in the bytecode #2, and the patched instruction #2 is used to invoke a field value #A in the bytecode #3. The field value #A in the bytecode #3 has a same value as the field value #A in the bytecode #2.

For specific descriptions of step 103, refer to the following descriptions. Details are not described herein.

104: Load a target bytecode #3 (an example of a target third bytecode) and a target bytecode #2 (an example of a target second bytecode).

A part or all of the at least one instruction belongs to the bytecode #2 after transfer. The target bytecode #2 is obtained by patching the part or all of the at least one instruction in the bytecode #2 after transfer.

When the at least one instruction does not belong to the bytecode #3, the target bytecode #3 is the bytecode #3. Alternatively, when a part of the at least one instruction belongs to the bytecode #3, the target bytecode #3 is obtained by patching the part of the at least one instruction in the bytecode #3.

In an example, all of the at least one instruction belongs to the bytecode #2 after transfer. The at least one instruction in the bytecode #2 after transfer is patched, and a bytecode file obtained by patching the instruction is the target bytecode #2. An instruction in the bytecode #3 does not need to be patched, and the target bytecode #3 is the bytecode #3.

In another example, a part (a part #A) of the at least one instruction belongs to the bytecode #2 after transfer, and the other part (a part #B) belongs to the bytecode #3. The part #A in the bytecode #2 after transfer is patched, and a bytecode file obtained by patching the instruction is the target bytecode #2. The part #B in the bytecode #3 is patched, and a bytecode file obtained by patching the instruction is the target bytecode #3.

In the solution in this embodiment of this application, the method 100 may be performed by a debugger (debugger). The bytecode #3 is generated during running of the debugger, in other words, the bytecode #3 is dynamically generated. In other words, in an execution process of the method 100, running of the debugger does not need to be stopped, and a debuggee is set to a suspended state by the debugger, and may be switched to a running state at any time. The debuggee is a target program. The source code that is modified is source code of the target program.

The method in this embodiment of this application may be applied to a plurality of programming languages, for example, Java or Python.

When the solution in this embodiment of this application is applied to Python, the source code may be a .py file. A bytecode may be a .pyc file. The bytecode may also be referred to as a module bytecode, a module bytecode file, or the like. The bytecode #1 may be referred to as an original module, the bytecode #2 may be referred to as a new module, and the bytecode #3 may be referred to as a satellite module.

When the solution in this embodiment of this application is applied to Java, the source code may be a java file. A bytecode may be a .class file. The bytecode may also be referred to as a class bytecode, a class bytecode file, a class file, or the like. A method is a method in a class or a function in a class. The bytecode #1 may be referred to as an original class bytecode or an original class, the bytecode #2 may be referred to as a new class bytecode or a new class, and the bytecode #3 may be referred to as a satellite class bytecode or a satellite class (satellite class). For ease of description, in embodiments of this application, a Java program is mainly used as an example for description, and this does not constitute a limitation on the solutions in embodiments of this application.

FIG. 2 is a diagram of a relationship between bytecodes according to an embodiment of this application. For example, the method 100 is applied to Java, and a bytecode corresponding to the original code is an original class. As shown in FIG. 2, the original class is modified to a new class. Specifically, a user modifies the original code. Incremental compilation may be performed on the modification, to obtain a new class bytecode. A satellite class is dynamically generated for the new class. A relationship between the satellite class and the new class is a code invocation relationship.

Optionally, the source code may be Java source code, and the first-type modification content may include at least one of the following: an added method, a method with a modified signature, a method with a modifier added, a method with a modifier deleted, an added lambda expression, a lambda expression with a modified body, an added inner anonymous class, or a modified inner anonymous class.

It should be understood that the foregoing description is merely an example, and the first-type modification content may further include another modification.

Optionally, the source code may be the Java source code, and an instruction in second-type modification content in the target second bytecode indicates to throw an unsupported exception. The second-type modification content includes at least one of the following: a deleted method, a deleted lambda expression, or a deleted inner anonymous class. The lambda expression may also be referred to as a lambda, which is an anonymous function, that is, a function without a function name.

For example, the bytecode #3 may include all first-type modifications for the bytecode #1.

For example, the first-type modification content may include an "incompatible" code change for the bytecode #1. The "incompatible" code change refers to a code change that does not meet a standard JVM hotswap requirement. Correspondingly, a "compatible" code change refers to a code change that meets the standard JVM hotswap requirement, that is, a modification of a method body.

In this way, the bytecode #3 may include all "incompatible" code changes for the bytecode #1.

For example, modifying a signature of a method includes modifying at least one of the following: a parameter of the method, a type of the parameter of the method, a return value of the method, or a type of the return value of the method.

For example, the modifier may include at least one of the following: a "static (static)" modifier or a "synchronized (synchronized)" modifier.

The following describes step 102.

Step 102 may be understood in the following manner. The bytecode #3 is generated based on the first-type modification content in the modification content in the bytecode #2 relative to the bytecode #1, and the bytecode #2 is modified, so that the bytecode #2 after transfer does not include a declaration that is the same as a declaration of a method in the bytecode #3.

The first-type modification content in the modification content in the bytecode #2 relative to the bytecode #1 corresponds to first-type modification content in a modification to the source code. In other words, the bytecode #3 corresponds to the first-type modification content in the modification to the source code.

In step 102, an empty bytecode file may be created, and the declaration of the first-type modification content in the bytecode #2 is moved into the bytecode file to obtain the bytecode #3.

For ease of description, the following mainly uses a method as an example for description. For a processing manner of adding or modifying a lambda expression or adding or modifying an inner anonymous class, refer to a processing manner of the method.

For example, the first-type modification content includes a method #1 added in the bytecode #2 relative to the bytecode #1.

In other words, the method #1 in the bytecode #2 does not belong to the bytecode #1. The bytecode #1 does not include the method #1, in other words, the bytecode #1 does not include a method with a same name as the method #1.

For example, the first-type modification content includes a method #2 (an example of a sixth method), in the bytecode #2, with a signature modified relative to the bytecode #1.

The method #2 in the bytecode #2 may be obtained by modifying a signature of a method #2 in the bytecode #1.

If a signature in a method #A in the bytecode #2 is changed relative to a method #A in the bytecode #1, the method #A in the bytecode #2 may be considered as the method #2 in the bytecode #2. The method #A in the bytecode #2 has a same name as the method #A in the bytecode #1. In step 102, a declaration of the method #A in the bytecode #2 is moved into the bytecode #3.

For example, the first-type modification content includes a method #3 (an example of a third method), in the bytecode #2, with a static modifier added or deleted relative to the bytecode #1.

The method #3 in the bytecode #2 may be obtained by deleting the static modifier from a method #3 in the bytecode #1. Alternatively, the method #3 in the bytecode #2 may be obtained by adding the static modifier to a method #3 in the bytecode #1.

If a static modifier is added to or deleted from a method #C in the bytecode #2 relative to a method #C in the bytecode #1, the method #C in the bytecode #2 may be considered as the method #3 in the bytecode #2. The method #C in the bytecode #2 has a same name as the method #C in the bytecode #1. In step 102, a declaration of the method #C in the bytecode #2 is moved into the bytecode #3.

For example, the first-type modification content includes a method #4 (an example of a fourth method), in the bytecode #2, with a synchronized modifier added relative to the bytecode #1.

The method #4 in the bytecode #2 may be obtained by adding the synchronized modifier to a method #4 in the bytecode #1.

If a synchronized modifier is added to a method #D in the bytecode #2 relative to a method #D in the bytecode #1, the method #D in the bytecode #2 may be considered as the method #4 in the bytecode #2. The method #D in the bytecode #2 has a same name as the method #D in the bytecode #1. In step 102, a declaration of the method #D is moved into the bytecode #3.

For example, the first-type modification content includes a method #5 (an example of a fifth method), in the bytecode #2, with a synchronized modifier deleted relative to the bytecode #1.

The method #5 in the bytecode #2 may be obtained by deleting the synchronized modifier from a method #5 in the bytecode #1.

If a synchronized modifier is deleted from a method #E in the bytecode #2 relative to a method #E in the bytecode #1, the method #E in the bytecode #2 may be considered as the method #5 in the bytecode #2. The method #E in the bytecode #2 has a same name as the method #E in the bytecode #1. In step 102, a declaration of the method #E is moved into the bytecode #3.

In this embodiment of this application, the first-type modification content may be referred to as a "special method", for example, a method added in methods of the bytecode #2 relative to the bytecode #1, and a method, in the methods of the bytecode #2, with a signature and/or modifier changed relative to the bytecode #1. The method #1 to the method #5 are special methods. For processing manners of other special methods, refer to the method #1 to the method #5. For ease of description, in embodiments of this application, the method #1 to the method #5 are mainly used as examples for description, and this does not constitute a limitation on the solutions in embodiments of this application.

In step 102, declarations of all special methods may be transferred from the bytecode #2 to the bytecode #3.

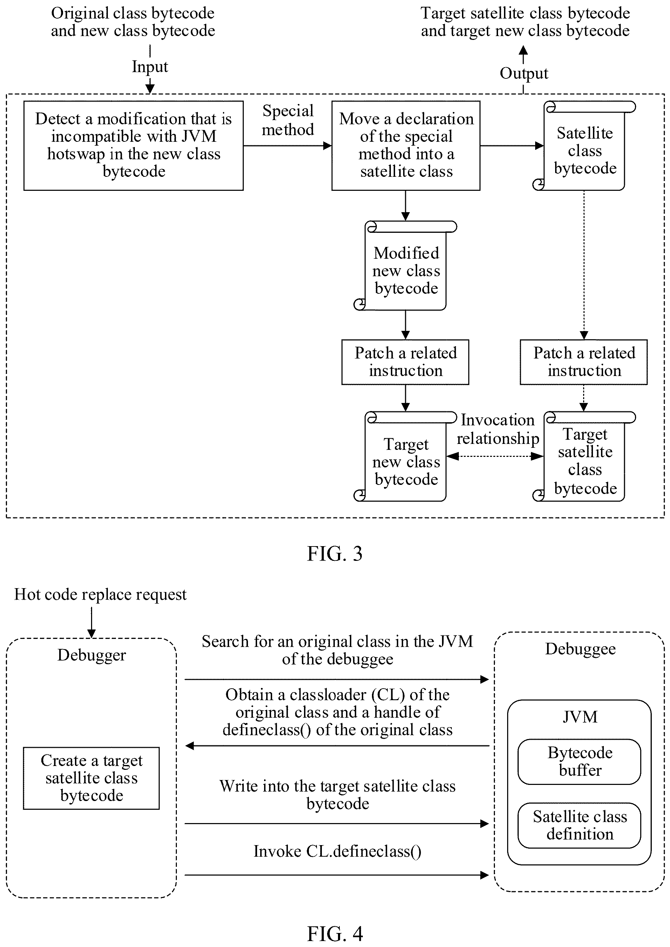

For example, the method 100 is applied to a Java program. In step 102, an empty satellite class may be defined, and a declaration of a special method is moved from a new class to the empty satellite class, to generate the satellite class, that is, a satellite class bytecode, as shown in FIG. 3.

As described above, the instruction in the second-type modification content in the target second bytecode indicates to throw an unsupported exception.

For example, the second-type modification content includes a deleted method. For example, the second-type modification content includes a deleted method #6, and the method 100 may further include: restoring the method #6 in the bytecode #2; and modifying a method body of the method #6, so that a method body of the modified method #6 indicates to throw an unsupported exception.

When a method is deleted from the bytecode #2 relative to the bytecode #1, the method may be restored in the bytecode #2, and a method body of the method may be modified, so that the modified method body indicates to throw an unsupported exception.

Further, when a static modifier is added to or deleted from a method in the bytecode #2 relative to the bytecode #1, the method 100 further includes: restoring, in the bytecode #2, the method in the bytecode #1, and modifying a method body of the method, so that the modified method body indicates to invoke the method in the bytecode #3.

In other words, when a static modifier is added to or deleted from a method, a declaration of the method in the bytecode #2 may be transferred to the bytecode #3, the method in the bytecode #1 is added to the bytecode #2, and a method body of the method is modified to invoke the method in the bytecode #3, that is, the added method in the bytecode #1 invokes the method in the bytecode #3.

Optionally, the method #3 is used as an example. The target bytecode #2 includes the method #3, a modifier of the method #3 in the target bytecode #2 is the same as a modifier of the method #3 in the bytecode #1, and a method body of the method #3 in the target bytecode #2 indicates to invoke the method #3 in the bytecode #3.

That the modifier of the method #3 in the target bytecode #2 is the same as the modifier of the method #3 in the bytecode #1 means that if the method #3 in the bytecode #1 includes a static modifier, the method #3 in the target bytecode #2 also includes the static modifier; or if the method #3 in the bytecode #1 does not include a static modifier, the method #3 in the target bytecode #2 does not include the static modifier.

For example, the method 100 may further include: restoring, in the bytecode #2, the method #3 in the bytecode #1; and modifying a method body of the restored method #3, so that the modified method body of the method #3 indicates to invoke the method #3 in the bytecode #3.

For ease of description, the method #3 in the bytecode #1 is referred to as a method #3 -a, and the method #3 in the bytecode #2 is referred to as a method #3-b. The method #3 in the source code is modified. To be specific, the method #3-a in the source code is modified to the method #3-b.

For example, a static modifier of the method #3 in the source code is deleted. For another example, a static modifier is added to the method #3 of the source code. Incremental compilation is performed on the source code after modification to obtain the bytecode #2. If a static modifier is added to or deleted from the method #3-b in the bytecode #2 relative to the method #3-a in the bytecode #1, a declaration of the method #3-b in the bytecode #2 may be transferred to the bytecode #3, the method #3-a in the bytecode #1 is restored in the bytecode #2, and a method body of the restored method #3-a is modified to invoke the method #3-b in the bytecode #3.

Further, when a signature of a method in the bytecode #2 is changed relative to the bytecode #1, the method 100 may further include: restoring, in the bytecode #2, the method in the bytecode #1, and modifying a method body of the method, so that the modified method body indicates to throw an unsupported exception.

In other words, when a signature of a method is changed, a declaration of the method in the bytecode #2 may be transferred to the bytecode #3, the method in the bytecode #1 is added to the bytecode #2, and a method body of the method is modified to throw an unsupported exception.

Optionally, the method #2 is used as an example. The target bytecode #2 includes the method #2, a signature of the method #2 in the target bytecode #2 is the same as a signature of the method #2 in the bytecode #1, and a method body of the method #2 in the target bytecode #2 indicates to throw an unsupported exception.

For example, when a difference between the method #2 in the bytecode #2 and the method #2 in the bytecode #1 includes the signature, the method further includes: restoring, in the bytecode #2, the method #2 in the bytecode #1; and modifying a method body of the restored method #2, so that the modified method body of the method #2 indicates to throw an unsupported exception.

For ease of description, the method #2 in the bytecode #1 is referred to as a method #2-a, and the method #2 in the bytecode #2 is referred to as a method #2-b. A signature of the method #2 in the source code is modified. To be specific, the method #2-a in the source code is modified to the method #2-b.

Incremental compilation is performed on the source code after modification to obtain the bytecode #2. If a signature of the method #2-b in the bytecode #2 is changed relative to the method #2-a in the bytecode #1, a declaration of the method #2-b in the bytecode #2 may be transferred to the bytecode #3, the method #2-a in the bytecode #1 is restored in the bytecode #2, and a method body of the restored method #2-a is modified to throw an unsupported exception.

Further, when a synchronized modifier is added to a method in the bytecode #2 relative to the bytecode #1, step 102 may include: moving a declaration of the unsynchronized method to the bytecode #3, and obtaining the synchronized method based on a synchronization mechanism. The method 100 may further include: modifying a method body of the synchronized method in the bytecode #2, so that the modified method body indicates to invoke the synchronized method in the bytecode #3.

Optionally, the method #4 is used as an example, and step 103 may include: moving a declaration of the unsynchronized method #4 to the bytecode #3. The target bytecode #2 includes the method #4, a modifier of the method #4 in the target bytecode #2 includes a synchronized modifier, and a method body of the method #4 in the target bytecode #2 indicates to invoke the synchronized method #4 in the bytecode #3. The synchronized method #4 in the bytecode #3 is implemented based on a synchronization tool.

For example, the synchronization tool may be a monitor (monitor) mechanism.

For example, when a synchronized modifier is added to the method #4 in the bytecode #2 relative to the method #4 in the bytecode #1, in step 102, the unsynchronized method #4 may be considered as an added method, defined in the bytecode #3, and wrapped by using the synchronization tool, to obtain the synchronized method #4. The synchronized method #4 is retained in the bytecode #2, and a method body of the synchronized method #4 in the bytecode #2 is modified, so that the method body of the method #4 in the bytecode #2 indicates to invoke the synchronized method #4 in the bytecode #3.

Further, when a synchronized modifier is deleted from a method in the bytecode #2 relative to the bytecode #1, step 102 may include: moving a declaration of the unsynchronized method in the bytecode #2 to the bytecode #3. The method 100 may further include: modifying a method body of the unsynchronized method in the bytecode #2, so that the modified method body indicates to invoke the unsynchronized method in the bytecode #3.

Optionally, the method #5 is used as an example. The target bytecode #2 includes the method #5, a modifier of the method #5 in the target bytecode #2 does not include a synchronized modifier, and a method body of the method #5 in the target bytecode #2 indicates to invoke the unsynchronized method #5 in the bytecode #3.

For example, when a synchronized modifier is deleted from the method #5 in the bytecode #2 relative to the method #5 in the bytecode #1, in step 102, the unsynchronized method #5 is considered as an added method and is defined in the bytecode #3. The unsynchronized method #5 is retained in the bytecode #2, and a method body of the unsynchronized method #5 is modified, so that the method body of the method #5 in the bytecode #2 indicates to invoke the unsynchronized method #5 in the bytecode #3.

The following describes step 103.

Optionally, the at least one instruction includes the instruction #1, the at least one piece of content includes content #1 (an example of first content), the content #1 belongs to the first-type modification content, the instruction #1 is used to invoke the content #1 in the bytecode #2, and the patched instruction #1 is used to invoke the content #1 in the bytecode #3.

In step 103, an instruction in the bytecode #2 after transfer and/or the bytecode #3 is patched, so that the patched instruction invokes content in the bytecode #3.

If the to-be-patched instruction is located in a method body, step 103 may be understood as patching a method body in the bytecode #2 after transfer and/or a method body in the bytecode #3.

There may be one or more methods in the bytecode #2 that need to invoke a "special method", and a related invocation instruction instructs to invoke the "special method" in the bytecode #2. After step 102, a declaration of the "special method" has been transferred into the bytecode #3. In this case, the related invocation instruction cannot normally invoke the "special method". In this case, the related invocation instruction may be patched, so that the patched related invocation instruction instructs to invoke the "special method" in the bytecode #3. The related invocation instruction is the at least one instruction in step 103.

In a possible implementation, content invoked by the to-be-patched instruction may include a method, in other words, the to-be-patched instruction may be an invocation instruction for a method.

The following uses an example in which the content #1 is a method #7 for description. It should be understood that, the method #7 is merely used as an example herein for description. For a method for patching an invocation instruction of another special method, refer to a manner of patching an invocation instruction of the method #7.

Optionally, the at least one instruction includes the instruction #1, the instruction #1 is used to invoke the method #7 in the bytecode #2, and the patched instruction #1 is used to invoke the method #7 in the bytecode #3.

There may be one or more methods in the bytecode #2 that need to invoke the method #7. For example, the instruction #1 instructs to invoke the method #7 in the bytecode #2. After step 102, a declaration of the method #7 has been transferred into the bytecode #3. In this case, the instruction #1 cannot normally invoke the method #7. In step 103, the instruction #1 may be patched, so that the patched instruction #1 instructs to invoke the method #7 in the bytecode #3.

For example, the method 100 is applied to a Java program, and patching the instruction #1 may be modifying a class, in the instruction #1, to which the method #7 belongs from a new class to a satellite class.

In a possible example, the instruction #1 is located in the bytecode #2 after transfer. For example, the instruction #1 may include a common invocation instruction or a dynamic invocation instruction. For example, the instruction #1 may be a dynamic invocation instruction for the method #7, that is, INVOKEDYNAMIC. For another example, the instruction #1 may be a common invocation instruction for the method #7.

In other words, the invocation instruction of the "special method" in the bytecode #2 may include a common invocation instruction or a dynamic invocation instruction.

For example, in step 103, all method bodies in the bytecode #2 after transfer may be scanned to patch the invocation instruction of the "special method", and an instruction for invoking the "special method" in the bytecode #2 is patched as an instruction for invoking the "special method" in the bytecode #3. The invocation instruction of the "special method" may include a common invocation instruction of the "special method" and a dynamic invocation instruction of the "special method".

In a possible example, the instruction #1 is located in the bytecode #3. That is, the instruction #1 in the bytecode #3 is used to invoke the method #7 in the bytecode #2. For example, the instruction #1 may be a virtual method invocation instruction, that is, INVOKEVIRTUAL.

For example, in step 103, all method bodies in the bytecode #3 may be scanned to patch the invocation instruction of the "special method", and an instruction for invoking the "special method" in the bytecode #2 is patched as an instruction for invoking the "special method" in the bytecode #3.

Further, a method in the bytecode #3 is a static method, and the patched instruction #1 may be used to invoke the static method #7 in the bytecode #3.

In another possible implementation, content invoked by the to-be-patched instruction may be a field value, in other words, the to-be-patched instruction may be an instruction related to the field value. For example, the to-be-patched instruction may include one or more of a field value getting (getting) instruction, a field value setting (setting) instruction, or the like. For example, the to-be-patched instruction may include getfield(), putfield(), or the like.

After step 102, a declaration of the "special method" has been transferred into the bytecode #3. There may be one or more methods in the bytecode #3 that relate to access to a field value in the bytecode #2 after transfer, that is, a related instruction instructs to invoke the field value in the bytecode #2 after transfer. In this case, the related instruction cannot implement normal access to the field value of this class. In this case, the related instruction may be patched, so that the patched related instruction instructs to invoke the field value in the bytecode #3.

The following uses an example in which the at least one piece of content includes a field value #1 (an example of a first field value) for description.

The at least one instruction includes an instruction #2, and content invoked by the instruction #2 may include the field value #1. For example, the instruction #2 may be used to get the field value #1 or set (set) the field value #1.

Optionally, the instruction #2 belongs to the bytecode #3, the instruction #2 is used to get the field value #1 in the bytecode #2 after transfer, and step 103 may include: generating a method #8 (an example of a first method) and a method #9 (an example of a second method) in the bytecode #3, where the method #8 is used to invoke the field value #1 in the bytecode #2 after transfer by using a reflection mechanism, and the method #9 is used to read the field value #1; and patching the instruction #2, where the patched instruction #2 is used to invoke the method #9.

The instruction #2 is originally used to invoke the field value in the bytecode #2 (or the bytecode #2 after transfer). In step 102, the declaration of the "special method" is transferred into the bytecode #3, and the instruction #2 may be an instruction in the "special method". In this case, the instruction #2 is transferred into the bytecode #3. In this case, the instruction #2 may not be able to normally invoke a member of the bytecode #2. In step 103, a help accessor may be generated to read a member value. The help accessor includes the method #8 and the method #9. In addition, the instruction #2 is patched, so that the patched instruction #2 may invoke the method #9. In this way, access to the field value in the bytecode #2 can be implemented.

According to the solution in this embodiment of this application, incremental compilation is performed on the modification content of the code to obtain the bytecode #2, and the bytecode #3 is dynamically generated for the bytecode #2, in other words, the bytecode #3 is generated during running, to implement hot code replace. This helps avoid repeated full compilation caused by modification of the code in a debugging process, and helps avoid restarting an entire application, thereby reducing time costs of debugging and improving debugging efficiency. In the solution in this embodiment of this application, hot code replace for the modification of the method body in an existing solution may be reused, to help reduce costs.

FIG. 3 is a diagram of a partial procedure of hot code replace according to an embodiment of this application. The following describes step 102 and step 103 by using an example with reference to FIG. 3.

As shown in FIG. 3, the method 100 may be performed by a hot code replace apparatus (that is, an HCR apparatus in FIG. 3).

Inputs of the HCR apparatus include an original class bytecode and a new class bytecode, and outputs of the HCR apparatus include a target new class bytecode and a target satellite class bytecode.

The original class bytecode corresponds to the bytecode #1 in the method 100. The new class bytecode corresponds to the bytecode #2 in the method 100.

The target new class bytecode corresponds to the target bytecode #2 in the method 100. The target satellite class bytecode corresponds to the target bytecode #3 in the method 100.

Specifically, the new class bytecode in FIG. 3 is obtained by performing incremental compilation on source code after modification, in other words, is obtained by performing incremental compilation on a modification of an original class.

The target new class bytecode corresponds to a compatible code modification, that is, a code modification that meets a JVM hotswap requirement, that is, a code modification in which only a method body is modified.

The target satellite class bytecode corresponds to an incompatible code modification, that is, a code modification that does not meet the JVM hotswap requirement. For example, the target satellite class bytecode corresponds to code modifications in which a method is added and a signature of a method is modified.

The HCR apparatus may perform the following steps.

S1: Detect a modification that is incompatible with JVM hotswap in the new class bytecode, to obtain a "special method".

After the original class bytecode and the new class bytecode are obtained, a code modification that does not meet the JVM hotswap requirement, that is, a code change that is incompatible with JVM hotswap, in the new class bytecode may be detected, to obtain a list of "special methods".

The "special method" includes at least one of the following: an added method, a method with a modified signature, a method with a modifier added, a method with a modifier deleted, or the like.

S2: Move a declaration of the "special method" in the new class bytecode into a satellite class, to generate the satellite class bytecode.

An empty satellite class is defined, and the declaration of the "special method" is moved into the satellite class, to generate the satellite class bytecode.

The satellite class bytecode corresponds to the bytecode #3 in the method 100. A new class bytecode (which is briefly referred to as a "modified new class bytecode") after the declaration of the "special method" in the new class bytecode is moved to the satellite class corresponds to the bytecode #2 after transfer in the method 100.

S3: Scan a method body in the new class bytecode, and patch a related instruction.

For example, scanning the method body in the new class bytecode may include: scanning a method body in the modified new class bytecode and a method body in the satellite class bytecode.

If there is a to-be-patched instruction in the satellite class bytecode, the to-be-patched instruction is patched, to obtain the target satellite class bytecode. If there is no to-be-patched instruction in the satellite class bytecode, the satellite class bytecode is the target satellite class bytecode.

For example, the related instruction may include the following four types.

### Type 1: Common invocation of the special method by a new class

In other words, the type 1 refers to a common invocation instruction located in the modified new class bytecode, and the common invocation instruction is used to implement common invocation of the special method.

### Type 2: Dynamic invocation of the special method by the new class

In other words, the type 2 refers to a dynamic invocation instruction located in the modified new class bytecode, and the dynamic invocation instruction is used to implement dynamic invocation of the special method.

### Type 3: Invoking method of a field value

In other words, the type 3 refers to a related instruction of the field value, for example, a getting instruction or a setting instruction. The getting instruction is used to get the field value. The setting instruction is used to set the field value.

### Type 4: Invocation of a method of the new class by the satellite class

In other words, the type 4 refers to an invocation instruction located in the satellite class bytecode. The invocation instruction is used to implement invocation of the method of the new class.

Specifically, the invocation instruction instructs to invoke a "special method" of the new class.

The target satellite class bytecode and the target new class bytecode may be obtained by patching the instruction.

The target satellite class bytecode and target new class bytecode may be dynamically loaded into a JVM of a debuggee.

In the solutions in embodiments of this application, the satellite class may be generated during running of the JVM.

It should be noted that step numbers in FIG. 3 are merely used for ease of description, and do not constitute any limitation on an execution sequence of the steps.

It should be understood that FIG. 3 is merely described by using an example in which the solutions in embodiments of this application are applied to a Java scenario, and does not constitute any limitation on an application scenario of the solutions in embodiments of this application.

FIG. 4 is a diagram of a loading process of a satellite class. For example, an HCR apparatus may be used as a module of an IDE debugger (debugger).

As shown in FIG. 4, the loading process may include the following process.

S41: The IDE debugger obtains a hot code replace request, where the request may include an original class bytecode and a new class bytecode.

S42: The IDE debugger searches for an original class in a JVM of a debuggee (debuggee).

S43: The IDE debugger obtains a classloader (classloader, CL) of the original class and a handle of a defineclass (defineclass) method of the original class. The defineclass method of the original class may be expressed as CL.defineclass().

S44: The IDE debugger writes a target satellite class bytecode into a bytecode buffer of the JVM of the debuggee.

In addition, the IDE debugger may write a target new class bytecode into the bytecode buffer of the JVM of the debuggee, to subsequently replace the original class bytecode.

S45: The IDE debugger invokes CL.defineclass() to create and load the satellite class in the JVM of the debuggee, that is, to define and load the satellite class.

The following describes step 102 and step 103 with reference to an example 1 to an example 5. A bytecode includes instructions represented in binary. To describe the solutions in embodiments of this application more intuitively, the bytecode is represented in a readable manner in the examples.

### Example 1:

In the example 1, the modification content includes an added method. The following provides descriptions by using an example.

An original class bytecode includes:

```
          public class x/HotReplaceProbe {
           private final Ljava/util/list; buffer
           private I counter
 
          public probe()Ljava/lang/String;
           LDC" "
           ARETURN
          }
```

"public" is a modifier. "HotReplaceProbe" is a class name. "private" is a modifier, indicating private, that is, only direct access by the class is allowed. "final" is a modifier. "counter" indicates a counter. "buffer" indicates a buffer. "L" indicates an array type. "probe()" is a method name. "LDC" is a constant push instruction. "ARETURN" is a method return instruction.

A new class bytecode includes:

```
        public class x/HotReplaceProbe {
           private final Ljava/util/list; buffer
           private I counter
 
             public probe()Ljava/lang/String;
             // ...
              ALOAD 0
              INVOKEDYNAMIC /* x/HotReplaceProbe.dowork()V */
              //...
              ARETURN
 
             private dowork()V
              //...
              ALOAD 0
              INVOKEVIRTUAL x/HotReplaceProbe.increment ()V
              //...
              RETURN
             private increment()V
             /*...*/
        }
```

"ALOAD" is a local variable push instruction, and "INVOKEDYNAMIC" is a method invocation instruction. "INVOKEVIRTUAL" is a method invocation instruction. "RETURN" is a method return instruction.

As described above, methods newly added in the new class bytecode relative to the original class bytecode include dowork() and increment(), that is, "special methods". dowork() and increment() may be used as two examples of the method #1. The method probe() is not changed.

It should be understood that some instructions of increment() are omitted in the new class bytecode.

The "special methods", that is, dowork() and increment(), are moved from the new class HotReplaceProbe to the satellite class HotReplaceProbe$Statellite.

A satellite class bytecode includes:

```
          public class x/HotReplaceProbe$Statellite {
          static dowork(Lx/ HotReplaceProbe;)V
              //...
             ALOAD 0
              INVOKEVIRTUAL x/HotReplaceProbe.increment
              //...
              RETURN
 
           static increment(Lx/ HotReplaceProbe;)V
           ALOAD 0
           GETFIELD x/ HotReplaceProbe.buffer : Ljava/util/List;
           //...
           GETFIELD x/ HotReplaceProbe.counter : I
           //...
           PUTFIELD x/ HotReplaceProbe.counter : I
           //...
           RETURN
         }
```

"GETFIELD" and "PUTFIELD" are object operation instructions.

A modified new class bytecode includes:

```
          public class x/HotReplaceProbe {
           private final Ljava/util/list; buffer
           private I counter
 
            public probe()Ljava/lang/String;
            // ...
             ALOAD 0
              INVOKEDYNAMIC /* x/HotReplaceProbe.dowork()V */
              //...
             ARETURN
           }
```

As described above, all methods in the satellite class bytecode are static (static) methods.

All method bodies of the new class (including all method bodies of the modified new class bytecode and the satellite class bytecode) are scanned to determine to-be-patched instructions. In the foregoing example, the to-be-patched instructions include the following five instructions:
INVOKEDYNAMIC HotReplaceProbe.doWork;
INVOKEVIRTUAL HotReplaceProbe.increment;
GETFIELD HotReplaceProbe.buffer;
GETFIELD HotReplaceProbe.counter; and
PUTFIELD HotReplaceProbe.counter.

The instruction INVOKEDYNAMIC HotReplaceProbe.doWork in the modified new class bytecode belongs to a type 1, the instruction INVOKEVIRTUAL HotReplaceProbe.increment in the satellite class bytecode belongs to a type 4, and instructions GETFIELD HotReplaceProbe.buffer, GETFIELD HotReplaceProbe.counter, and PUTFIELD HotReplaceProbe.counter in the satellite class bytecode all belong to a type 3.

The following describes an instruction patching manner by using an example.

For INVOKEDYNAMIC HotReplaceProbe.doWork, the instruction is modified from invoking a new class method to invoking a satellite class static method. That is, a class to which a method belongs is changed. To be specific, a class to which dowork in the instruction belongs (that is, the new class HotReplaceProbe) is modified to the satellite class HotReplaceProbe$Statellite. Specifically, the instruction is modified to INVOKEDYNAMIC HotReplaceProbe$Statellite.doWork.

A target new class bytecode obtained by patching the instruction includes:

```
          public class x/HotReplaceProbe {
           private final Ljava/util/list; buffer
           private I counter
 
            public probe()Ljava/lang/String;
            // ...
             ALOAD 0
              INVOKEDYNAMIC /* x/HotReplaceProbe$Statellite.dowork */
              //...
             ARETURN
          }
```

For INVOKEVIRTUAL HotReplaceProbe.increment, the instruction is modified from invoking a new class method to invoking a satellite class static method. That is, a class to which a method belongs is changed. To be specific, a class to which increment in the instruction belongs (that is, the new class HotReplaceProbe) is modified to the satellite class HotReplaceProbe$Statellite. Specifically, the instruction is modified to INVOKESTATIC HotReplaceProbe$Statellite. increment.

For GETFIELD HotReplaceProbe.buffer, a JVM reflection mechanism may be used to access a new class private member and generate a help accessor (help accessor) in the satellite class. Therefore, more code needs to be generated.

Specifically, a reflection buffer reflect$buffer() accesses a private member buffer of the new class HotReplaceProbe by using the reflection mechanism, and loads the private member buffer into a static private member f_buffer_001. Then, the member value is read through a get buffer get$buffer(). GETFIELD HotReplaceProbe.buffer is modified to invoking get$buffer(), that is, modified to INVOKESTATIC HotReplaceProbe$Statellite. get$buffer (...). reflect$buffer() is an example of the method #8 described above. get$buffer() is an example of the method #9 described above.

A target satellite class bytecode obtained by patching the instructions includes:

```
          public class x/HotReplaceProbe$Statellite {
           static dowork(Lx/ HotReplaceProbe;)V
              //...
             ALOAD 0
              INVOKESTATIC HotReplaceProbe$Statellite. increment
              //...
              RETURN
 
            private static volatile Ljava/lang/reflect/Field; f_buffer_001
 
            private static reflect$buffer()Ljava/lang/reflect/Field;
             GETSTATIC x/ HotReplaceProbe$Statellite. f_buffer_001
            //...
            INVOKEVIRTUAL java/lang/Class.getDeclaredField
            //...
            PUTSTATIC x/HotReplaceProbe$Statellite. f_buffer_001
 
             static get$buffer(Lx/ HotReplaceProbe;) Ljava/util/List;
              INVOKESTATIC x/HotReplaceProbe$Statellite. reflect$buffer()
               ALOAD 0
               INVOKEVIRTUAL java/lang/reflect/Field.get
               ARETURN
 
             static increment(Lx/ HotReplaceProbe;)V
            ALOAD 0
            INVOKESTATIC x/HotReplaceProbe$Statellite.get$buffer(...)
            //...
            RETURN
            }
```

"INVOKESTATIC" is a method invocation instruction. "GETSTATIC" and "PUTSTATIC" are object operation instructions.

In the target satellite class bytecode, instructions between a declaration of dowork and "static increment(Lx/ HotReplaceProbe;)V" may be used as an example of the help accessor.

Instruction patching manners of GETFIELD HotReplaceProbe.counter and PUTFIELD HotReplaceProbe.counter are similar to the instruction patching manner of GETFIELD HotReplaceProbe.buffer. To avoid repetition, details are not described herein again, and are not shown in the foregoing example.

### Example 2:

In the example 2, the modification content includes a deleted method and a method with a modified signature. The following provides descriptions by using an example.

An original class bytecode includes:

```
          public class x/HotReplaceProbe {
           public probe1()L java/lang/String;
           LDC" "
           ARETURN
           public probe2()L java/lang/String;
           LDC" "
           ARETURN
          }
```

A new class bytecode includes:

```
          public class x/HotReplaceProbe{
           public probe1(Ljava/lang/String)Ljava/lang/String;
            LDC" "
           ARETURN
          }
```

As described above, relative to the original class bytecode, in the new class bytecode, a method probe2() is deleted, and a signature of a method probe1() is modified, to be specific, a string-type parameter is added.probe1() is a "special method".probe1() may be used as an example of the method #6. probe2() may be used as an example of the method #2.

The foregoing modification manner is for an incompatible change of the original code, and may be used to transform the new class bytecode.

The method probe2() is deleted in the new class bytecode relative to the original class bytecode. Therefore, in a transformation process, the method probe2() may be restored, and a method body of probe2() is modified to throw (throw) an unsupported exception (unsupported exception).

The signature of the method probe1() is modified in the new class bytecode relative to the original class bytecode, and a declaration of the method probe1() in the new class bytecode is moved into a satellite class bytecode. In the transformation process, the original method probe1(), that is, probe1() in the original class bytecode, may be restored, and a method body of probe1() is modified to throw an unsupported exception. Alternatively, the method with the modified signature may be understood in the following manner. That the signature of the method probe1() is modified in the new class bytecode relative to the original class bytecode may be considered as that the original method probe1(), that is, probe1() in the original class bytecode is deleted in the new class bytecode relative to the original class bytecode, and the method probe1() with the modified signature is added in the satellite class bytecode.

The transformed new class bytecode includes:

```
          public class x/HotReplaceProbe'{
           public probel()Ljava/lang/String;
           ATHROW UnsupportedException
            public probe2()Ljava/lang/String;
           ATHROW UnsupportedException
          }
```

The satellite class bytecode includes:

```
          public class x/HotReplaceProbe$Statellite {
           public probel(Ljava/lang/String)Ljava/lang/String;
            LDC" "
           ARETURN
          }
```

"ATHROW" is an exception processing instruction.

For an instruction patching manner, refer to the example 1. To avoid repetition, details are not described herein again.

### Example 3:

In the example 3, the modification content includes a method with a static modifier added. The following provides descriptions by using an example.

An original class bytecode includes:

```
          public class x/HotReplaceProbe {
           public probe()L java/lang/String;
           LDC" "
           ARETURN
          }
```

A new class bytecode includes:

```
          public class x/HotReplaceProbe {
           public static probe()Ljava/lang/String;
            LDC" "
           ARETURN
          }
```

As described above, the static modifier is added in the new class bytecode relative to the original class bytecode. probe() is a "special method". probe() may be used as an example of the method #3.

The foregoing modification manner is for an incompatible change of the original code, and may be used to transform the new class bytecode.

For the method with the static modifier added, the static method may be considered as an added method, and the method is defined in a satellite class, to be specific, the static method is added to a satellite class bytecode. A non-static method may be retained in the new class, and invocation is forwarded to the static method in the satellite class.

Specifically, a static modifier is added to the method probe() in the new class bytecode relative the original class bytecode, and a declaration of the method probe() in the new class bytecode is moved into the satellite class bytecode. In a process of transforming the new class bytecode, the original method probe(), that is, probe() in the original class bytecode, may be restored, and a method body of probe() is modified to invoke probe() in the satellite class bytecode.

The transformed new class bytecode includes:

```
          public class x/HotReplaceProbe {
           public static probe()Ljava/lang/String;
           INVOKEDYNAMIC x/ HotReplaceProbe$Statellite.probe()
           ARETURN
          }
```

The satellite class bytecode includes:

```
          public class x/HotReplaceProbe$Statellite {
           public static probe()Ljava/lang/String;
            LDC" "
           ARETURN
          }
```

For an instruction patching manner, refer to the example 1. To avoid repetition, details are not described herein again.

For a method with the static modifier deleted, a processing procedure is similar to that of adding the static modifier. To be specific, the method with the static modifier deleted may be considered as an added method, and the method is defined in the satellite class, to be specific, the method with the static modifier deleted is added to the satellite class bytecode. The method in the original class is retained in the new class, and invocation is forwarded to the method in the satellite class.

Specifically, a modifier is deleted from a method in the new class bytecode relative the original class bytecode, and a declaration of the method in the new class bytecode is moved into the satellite class bytecode. In a process of transforming the new class bytecode, the original method, that is, the method in the original class bytecode, may be restored, and a method body of the method is modified to invoke the method in the satellite class bytecode.

### Example 4:

In the example 4, the modification content includes a method with a synchronized modifier added. The following provides descriptions by using an example.

An original class bytecode includes:

```
          public class x/HotReplaceProbe{
           private static probe()V
              //...
              INVOKEVIRTUAL java/lang/Object.notify()V
              //...
          }
```

A new class bytecode includes:

```
 public class x/HotReplaceProbe{
           private synchronized static probe()V
              //...
              INVOKEVIRTUAL java/lang/Object.notify()V
              //...
 }
```

As described above, the synchronized modifier is added in the new class bytecode relative to the original class bytecode. probe() is a "special method". probe() may be used as an example of the method #4.

The foregoing modification manner is for an incompatible change of the original code, and may be used to transform the new class bytecode.

For the method with the synchronized modifier added, the unsynchronized method may be considered as an added method, and the unsynchronized method is added to a satellite class bytecode to maintain compatibility with the original code. Synchronization is implemented on the unsynchronized (nosync) method by using the monitor mechanism. Specifically, the unsynchronized (nosync) method is explicitly wrapped by using a MONITORENTER/TRY/FINALLY/MONITOREXIT statement to implement synchronization. The synchronized method in the transformed new class invokes the synchronized method in the satellite class.

Specifically, a synchronized modifier is added to the method probe() in the new class bytecode relative the original class bytecode, a declaration of the unsynchronized method probe() is moved into the satellite class bytecode, and synchronization is performed on the unsynchronized method. A method body of the synchronized method probe() in the new class bytecode is modified to invoke the synchronized method probe() in the satellite class bytecode.

The transformed new class bytecode includes:

```
          public class x/HotReplaceProbe {
           private synchronized static probe()V
              //...
              INVOKEDYNAMIC x/HotReplaceProbe$Statellite.probe()
              //...
          }
```

The satellite class bytecode includes:

```
          public class x/HotReplaceProbe$Statellite {
           static nosync$probe()V;
              //...
              INVOKEVIRTUAL java/lang/Object.notify()V
              //...
              static probe()V
              TRYCATCHBLOCK L0, L1, L2
              //...
              MONITORENTER
           L0
            INVOKESTATIC x/HotReplaceProbe$Statellite.nosync$foo()V
            //...
           L1
            RETURN
           L2
            //...
            MONITOREXIT
            ATHROW
          }
```

MONITORENTER is a lock instruction of the monitor (monitor), and MONITOREXIT is an unlock instruction. TRYCATCHBLOCK is an exception processing mechanism.

For an instruction patching manner, refer to the example 1. To avoid repetition, details are not described herein again.

### Example 5:

In the example 5, the modification content includes a method with a synchronized modifier deleted. The following provides descriptions by using an example.

An original class bytecode includes:

```
          public class x/HotReplaceProbe {
           private synchronized static probe()V
              //...
              INVOKEVIRTUAL java/lang/Object.notify()V
              //...
          }
```

A new class bytecode includes:

```
          public class x/HotReplaceProbe{
           private static probe()V
              //...
              INVOKEVIRTUAL java/lang/Object.notify()V
              //...
          }
```

As described above, the synchronized modifier is deleted in the new class bytecode relative to the original class bytecode. probe() is a "special method". probe() may be used as an example of the method #5.

The foregoing modification manner is for an incompatible change of the original code, and may be used to transform the new class bytecode.

For the method with the synchronized modifier deleted, the unsynchronized method may be considered as an added method, and the method is defined in a satellite class, to be specific, the unsynchronized method is added to a satellite class bytecode. The unsynchronized method in the transformed new class invokes the unsynchronized (nosync) method in the satellite class.

Specifically, a synchronized modifier is deleted from the method probe() in the new class bytecode relative the original class bytecode, and a declaration of the unsynchronized method probe() is moved into the satellite class bytecode. A method body of the unsynchronized method probe() in the new class bytecode is modified to invoke the unsynchronized method probe() in the satellite class bytecode.

The transformed new class bytecode includes:

```
          public class x/HotReplaceProbe{
           private static probe()V
              //...
              INVOKEDYNAMIC x/HotReplaceProbe$Statellite.nosync$probe()
              //...
          }
```

The satellite class bytecode includes:

```
          public class x/HotReplaceProbe$Statellite {
           public static nosync$probe()V;
              //...
              INVOKEVIRTUAL java/lang/Object.notify()V
              //...
          }
```

For an instruction patching manner, refer to the example 1. To avoid repetition, details are not described herein again.

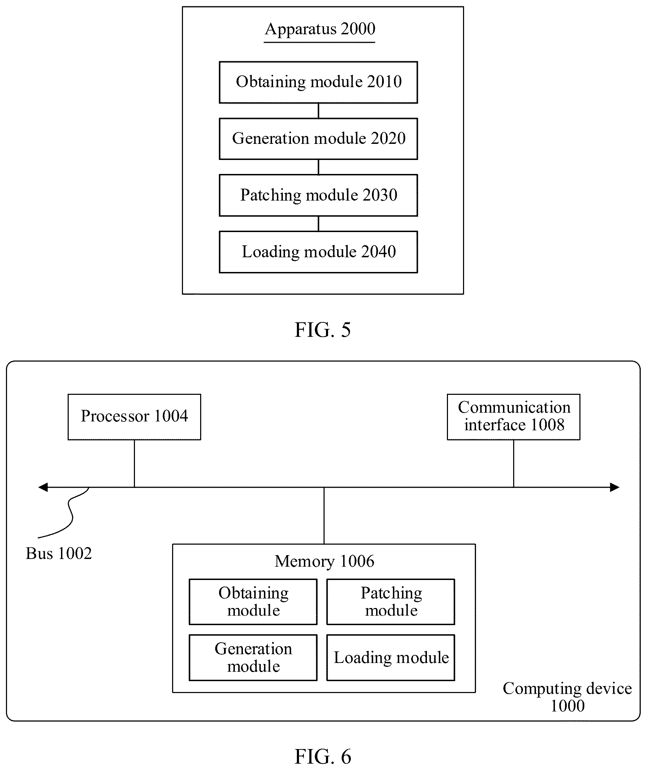

The following describes apparatuses in embodiments of this application with reference to FIG. 5 to FIG. 8. It should be understood that the apparatuses described below can perform the method in the foregoing embodiments of this application. To avoid unnecessary repetition, repeated descriptions are appropriately omitted below when the apparatuses in embodiments of this application are described.

FIG. 5 is a block diagram of a hot code replace apparatus according to an embodiment of this application. The apparatus 2000 shown in FIG. 5 may be configured to perform the method shown in FIG. 1. The apparatus 2000 includes an obtaining module 2010, a generation module 2020, a patching module 2030, and a loading module 2040.

In a possible implementation, the apparatus 2000 may be configured to perform the method shown in FIG. 1.

The obtaining module 2010 is configured to obtain a first bytecode and a second bytecode, where the first bytecode is a bytecode obtained by compiling source code, and the second bytecode is obtained by performing incremental compilation on the source code after modification.

The generation module 2020 is configured to transfer, to a third bytecode, a declaration of first-type modification content in modification content in the second bytecode relative to the first bytecode, where the first-type modification content includes modification content other than a modification of a method body.

The patching module 2030 is configured to patch at least one instruction in the second bytecode after transfer or the third bytecode, where the at least one instruction is used to invoke at least one piece of content in the second bytecode, and the at least one patched instruction is used to invoke content that is in the third bytecode and that corresponds to the at least one piece of content.

The loading module 2040 is configured to load a target second bytecode and a target third bytecode, where a part or all of the at least one instruction belongs to the second bytecode after transfer, and the target second bytecode is obtained by patching the part or all of the at least one instruction in the second bytecode after transfer; and when a part of the at least one instruction belongs to the third bytecode, the target third bytecode is obtained by patching the part of the at least one instruction in the third bytecode; or when the at least one instruction does not belong to the third bytecode, the target third bytecode is the third bytecode.

Optionally, the source code is Java source code, and the first-type modification content includes at least one of the following: an added method, a method with a modified signature, a method with a modifier added, a method with a modifier deleted, an added lambda expression, a lambda expression with a modified body, an added inner anonymous class, or a modified inner anonymous class.

Optionally, the at least one instruction includes a first instruction, the at least one piece of content includes first content, the first content belongs to the first-type modification content, the first instruction is used to invoke the first content in the second bytecode, and the patched first instruction is used to invoke the first content in the third bytecode.

Optionally, the at least one instruction includes a first instruction, the at least one piece of content includes a first method, the first instruction is used to invoke the first method in the second bytecode, and the patched first instruction is used to invoke the first method in the third bytecode.

The at least one instruction includes a second instruction, and the second instruction belongs to the third bytecode. The patching module 2030 is specifically configured to: generate a first method and a second method in the third bytecode, where the first method is used to access a first field value in the second bytecode after transfer by using a reflection mechanism, and the second method is used to read the first field value; and patch the second instruction, so that the patched second instruction is used to invoke the second method.

Optionally, the first-type modification content includes a third method with a modifier added or a third method with a modifier deleted, the modifier is a static modifier, a modifier of the third method in the target second bytecode is the same as a modifier of the third method in the first bytecode, and a method body of the third method in the target second bytecode indicates to invoke the third method in the third bytecode.

Optionally, the first-type modification content includes a fourth method with a modifier added, and the modifier is a synchronized modifier. The generation module 2020 is specifically configured to: transfer a declaration of the unsynchronized fourth method to the third bytecode, where a modifier of the fourth method in the target second bytecode includes the synchronized modifier, a method body of the fourth method in the target second bytecode indicates to invoke the synchronized fourth method in the third bytecode, and the synchronized fourth method is implemented based on a synchronization tool.

Optionally, the first-type modification content includes a fifth method with a modifier deleted, the modifier is a synchronized modifier, a modifier of the fifth method in the target second bytecode does not include the synchronized modifier, and a method body of the fifth method in the target second bytecode indicates to invoke the fifth method in the third bytecode.

Optionally, the first-type modification content includes a sixth method with a modified signature, a signature of the sixth method in the target second bytecode is the same as a signature of the sixth method in the first bytecode, and a method body of the sixth method in the target second bytecode indicates to throw an unsupported exception.

Optionally, the source code is the Java source code, an instruction in second-type modification content in the target second bytecode indicates to throw an unsupported exception, and the second-type modification content includes at least one of the following: a deleted method, a deleted lambda expression, or a deleted inner anonymous class.

For specific descriptions, refer to the foregoing method 100. Details are not described herein again.

Each module in the apparatus 2000 may be implemented by using software or hardware. For example, the following uses the generation module 2020 as an example to describe an implementation of the generation module 2020. Similarly, for an implementation of another module, refer to the implementation of the generation module 2020.

A module is used as an example of a software functional unit, and the generation module 2020 may include code run on a compute instance. The compute instance may include at least one of a physical host (computing device), a virtual machine, and a container. Further, there may be one or more compute instances. For example, the generation module 2020 may include code run on a plurality of hosts/virtual machines/containers. It should be noted that the plurality of hosts/virtual machines/containers configured to run the code may be distributed in a same region (region), or may be distributed in different regions. Further, the plurality of hosts/virtual machines/containers configured to run the code may be distributed in a same availability zone (availability zone, AZ), or may be distributed in different AZs. Each AZ includes one data center or a plurality of data centers with similar geographical locations. Usually, one region may include a plurality of AZs.

Similarly, the plurality of hosts/virtual machines/containers configured to run the code may be distributed in a same virtual private cloud (virtual private cloud, VPC), or may be distributed in a plurality of VPCs. Usually, one VPC is set in one region. For communication between two VPCs in a same region and cross-region communication between VPCs in different regions, a communication gateway needs to be disposed in each VPC, and interconnection between the VPCs is implemented through communication gateways.

A module is used as an example of a hardware functional unit, and the generation module 2020 may include at least one computing device, for example, a server. Alternatively, the generation module 2020 may be a device implemented by an application-specific integrated circuit (application-specific integrated circuit, ASIC) or a programmable logic device (programmable logic device, PLD), or the like. The PLD may be implemented by a complex programmable logic device (complex programmable logic device, CPLD), a field programmable gate array (field programmable gate array, FPGA), a generic array logic (generic array logic, GAL), or any combination thereof.

A plurality of computing devices included in the generation module 2020 may be distributed in a same region, or may be distributed in different regions. The plurality of computing devices included in the generation module 2020 may be distributed in a same AZ, or may be distributed in different AZs. Similarly, the plurality of computing devices included in the generation module 2020 may be distributed in a same VPC, or may be distributed in a plurality of VPCs. The plurality of computing devices may be any combination of computing devices such as the server, the ASIC, the PLD, the CPLD, the FPGA, and the GAL.

It should be noted that, in another embodiment, the generation module 2020 may be configured to perform any step in the hot code replace method, and another module may be configured to perform any step in the hot code replace method. Steps implemented by modules may be specified based on a requirement, and the modules separately implement different steps in the hot code replace method to implement all functions of the apparatus 2000.

This application further provides a computing device 1000. As shown in FIG. 6, the computing device 1000 includes a bus 1002, a processor 1004, a memory 1006, and a communication interface 1008. The processor 1004, the memory 1006, and the communication interface 1008 communicate with each other through the bus 1002. The computing device 1000 may be a server or a terminal device. It should be understood that a quantity of processors and a quantity of memories in the computing device 1000 are not limited in this application.

The bus 1002 may be a peripheral component interconnect (peripheral component interconnect, PCI) bus, an extended industry standard architecture (extended industry standard architecture, EISA) bus, or the like. The bus may be classified as an address bus, a data bus, a control bus, or the like. For ease of representation, the bus is represented by using only one line in FIG. 6. However, it does not mean that there is only one bus or only one type of bus. The bus 1002 may include a path for transferring information between components (for example, the memory 1006, the processor 1004, and the communication interface 1008) of the computing device 1000.

The processor 1004 may include any one or more of processors such as a central processing unit (central processing unit, CPU), a graphics processing unit (graphics processing unit, GPU), a microprocessor (microprocessor, MP), and a digital signal processor (digital signal processor, DSP).

The memory 1006 may include a volatile memory (volatile memory), for example, a random access memory (random access memory, RAM). The processor 1004 may further include a non-volatile memory (non-volatile memory), for example, a read-only memory (read-only memory, ROM), a flash memory, a hard disk drive (hard disk drive, HDD), or a solid-state drive (solid-state drive, SSD).

The memory 1006 stores executable program code. The processor 1004 executes the executable program code to separately implement functions of the obtaining module 2010, the generation module 2020, the patching module 2030, and the loading module 2040, to implement the hot code replace method. In other words, the memory 1006 stores instructions used to perform the hot code replace method.

The communication interface 1008 uses a transceiver module, for example, but not limited to, a network interface card or a transceiver, to implement communication between the computing device 1000 and another device or a communication network.

An embodiment of this application further provides a computing device cluster. The computing device cluster includes at least one computing device. The computing device may be a server, for example, a central server, an edge server, or a local server in a local data center. In some embodiments, the computing device may alternatively be a terminal device, for example, a desktop computer, a notebook computer, or a smartphone.

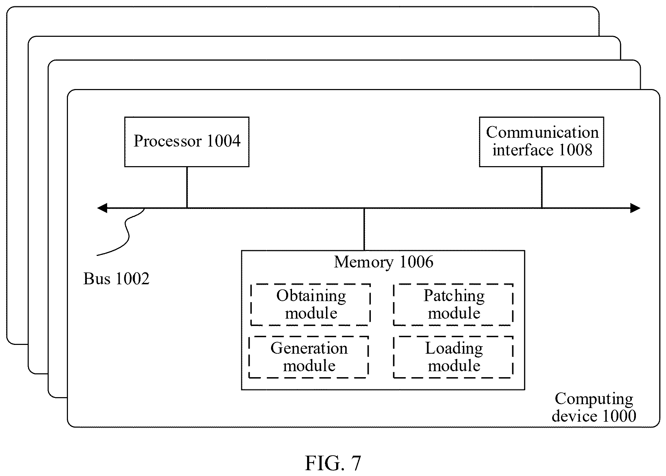

As shown in FIG. 7, the computing device cluster includes at least one computing device 1000. A memory 1006 in one or more computing devices 1000 in the computing device cluster may store same instructions used to perform the hot code replace method.

In some possible implementations, the memory 1006 in the one or more computing devices 1000 in the computing device cluster each may alternatively store a part of the instructions used to perform the hot code replace method. In other words, a combination of the one or more computing devices 1000 may jointly execute the instructions used to perform the hot code replace method.

It should be noted that memories 1006 in different computing devices 1000 in the computing device cluster may store different instructions separately used to perform parts of functions of a hot code replace system. In other words, the instructions stored in the memories 1006 in the different computing devices 1000 may implement functions of one or more of the obtaining module 2010, the generation module 2020, the patching module 2030, and the loading module 2040.

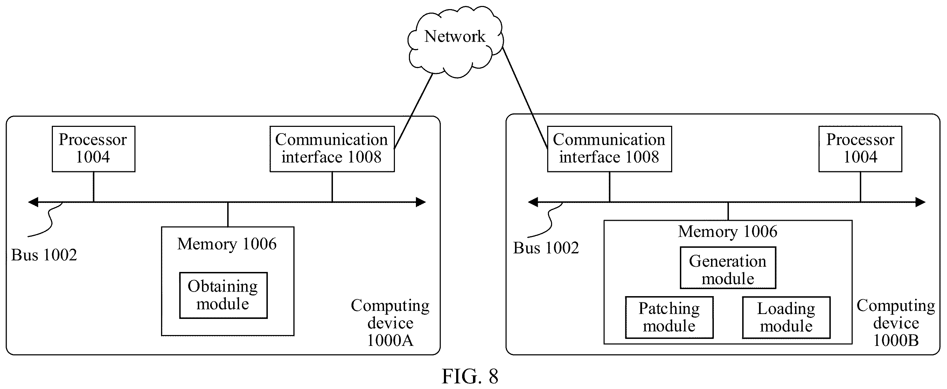

In some possible implementations, the one or more computing devices in the computing device cluster may be connected through a network. The network may be a wide area network, a local area network, or the like. FIG. 8 shows a possible implementation. As shown in FIG. 8, two computing devices 1000A and 1000B are connected through a network. Specifically, each computing device is connected to the network through a communication interface in the computing device. In this possible implementation, a memory 1006 of the computing device 1000A stores an instruction for performing a function of the obtaining module 2010. In addition, a memory 1006 in the computing device 1000B stores instructions for performing functions of the generation module 2020, the patching module 2020, and the loading module 2030.

A connection manner between computing device clusters shown in FIG. 8 may be as follows: In consideration of that data may need to be stored in the hot code replace method provided in this application, it is considered that the functions implemented by the generation module 2020, the patching module 2020, and the loading module 2030 are performed by the computing device 1000B.

It should be understood that functions of the computing device 1000A shown in FIG. 8 may alternatively be completed by a plurality of computing devices 1000. Similarly, functions of the computing device 1000B may alternatively be completed by a plurality of computing devices 1000.

An embodiment of this application further provides a computer program product including instructions. The computer program product may be software or a program product that includes instructions and that can run on a computing device or be stored in any usable medium. When the computer program product runs on at least one computing device, the at least one computing device is enabled to perform the hot code replace method.

An embodiment of this application further provides a computer-readable storage medium. The computer-readable storage medium may be any usable medium that can be stored by a computing device, or a data storage device, such as a data center, including one or more usable media. The usable medium may be a magnetic medium (for example, a floppy disk, a hard disk drive, or a magnetic tape), an optical medium (for example, a DVD), a semiconductor medium (for example, a solid-state drive), or the like. The computer-readable storage medium includes instructions that instruct the computing device to perform the hot code replace method.

Finally, it should be noted that the foregoing embodiments are merely intended to describe the technical solutions of this application other than limiting this application. Although this application is described in detail with reference to the foregoing embodiments, persons of ordinary skill in the art should understand that they may still make modifications to the technical solutions recorded in the foregoing embodiments or make equivalent replacements to some technical features thereof, without departing from the protection scope of the technical solutions of embodiments of this application.

## Claims

1. A hot code replace method, comprising:
Obtaining a first bytecode and a second bytecode, wherein the first bytecode is a bytecode obtained by compiling source code, and the second bytecode is obtained by performing incremental compilation on the source code after modification;
transferring, to a third bytecode, a declaration of first-type modification content in modification content in the second bytecode relative to the first bytecode, wherein the first-type modification content comprises modification content other than a modification of a method body;
patching at least one instruction in the second bytecode after transfer or the third bytecode, wherein the at least one instruction is used to invoke at least one piece of content in the second bytecode, and the at least one patched instruction is used to invoke content that is in the third bytecode and that corresponds to the at least one piece of content; and
loading a target second bytecode and a target third bytecode, wherein a part or all of the at least one instruction belongs to the second bytecode after transfer, and the target second bytecode is obtained by patching the part or all of the at least one instruction in the second bytecode after transfer; and when a part of the at least one instruction belongs to the third bytecode, the target third bytecode is obtained by patching the part of the at least one instruction in the third bytecode; or when the at least one instruction does not belong to the third bytecode, the target third bytecode is the third bytecode.

2. The method according to claim 1, wherein the source code is Java source code, and the first-type modification content comprises at least one of the following: an added method, a method with a modified signature, a method with a modifier added, a method with a modifier deleted, an added lambda expression, a lambda expression with a modified body, an added inner anonymous class, or a modified inner anonymous class.

3. The method according to claim 1 or 2, wherein the at least one instruction comprises a first instruction, the at least one piece of content comprises first content, the first content belongs to the first-type modification content, the first instruction is used to invoke the first content in the second bytecode, and the patched first instruction is used to invoke the first content in the third bytecode.

4. The method according to any one of claims 1 to 3, wherein the at least one instruction comprises a second instruction, the second instruction belongs to the third bytecode, the at least one piece of content comprises a first field value, and the second instruction is used to invoke the first field value in the second bytecode; and patching the at least one instruction in the second bytecode after transfer or the third bytecode comprises:
generating a first method and a second method in the third bytecode, wherein the first method is used to access the first field value in the second bytecode after transfer by using a reflection mechanism, and the second method is used to read the first field value; and
patching the second instruction, so that the patched second instruction is used to invoke the second method.

5. The method according to any one of claims 1 to 4, wherein the first-type modification content comprises a third method with a modifier added or a third method with a modifier deleted, the modifier is a static modifier, a modifier of the third method in the target second bytecode is the same as a modifier of the third method in the first bytecode, and a method body of the third method in the target second bytecode indicates to invoke the third method in the third bytecode.

6. The method according to any one of claims 1 to 5, wherein the first-type modification content comprises a fourth method with a modifier added, and the modifier is a synchronized modifier; and
transferring, to the third bytecode, the declaration of the first-type modification content in the modification content in the second bytecode relative to the first bytecode comprises:
transferring a declaration of the unsynchronized fourth method to the third bytecode, wherein
a modifier of the fourth method in the target second bytecode comprises the synchronized modifier, a method body of the fourth method in the target second bytecode indicates to invoke the synchronized fourth method in the third bytecode, and the synchronized fourth method is implemented based on a synchronization tool.

7. The method according to any one of claims 1 to 6, wherein the first-type modification content comprises a fifth method with a modifier deleted, the modifier is a synchronized modifier, a modifier of the fifth method in the target second bytecode does not comprise the synchronized modifier, and a method body of the fifth method in the target second bytecode indicates to invoke the fifth method in the third bytecode.

8. The method according to any one of claims 1 to 7, wherein the first-type modification content comprises a sixth method with a modified signature, a signature of the sixth method in the target second bytecode is the same as a signature of the sixth method in the first bytecode, and a method body of the sixth method in the target second bytecode indicates to throw an unsupported exception.

9. The method according to any one of claims 1 to 8, wherein the source code is the Java source code, an instruction in second-type modification content in the target second bytecode indicates to throw an unsupported exception, and the second-type modification content comprises at least one of the following: a deleted method, a deleted lambda expression, or a deleted inner anonymous class.

10. A hot code replace apparatus, comprising:
an obtaining module, configured to obtain a first bytecode and a second bytecode, wherein the first bytecode is a bytecode obtained by compiling source code, and the second bytecode is obtained by performing incremental compilation on the source code after modification;
a generation module, configured to transfer, to a third bytecode, a declaration of first-type modification content in modification content in the second bytecode relative to the first bytecode, wherein the first-type modification content comprises modification content other than a modification of a method body;
a patching module, configured to patch at least one instruction in the second bytecode after transfer or the third bytecode, wherein the at least one instruction is used to invoke at least one piece of content in the second bytecode, and the at least one patched instruction is used to invoke content that is in the third bytecode and that corresponds to the at least one piece of content; and
a loading module, configured to load a target second bytecode and a target third bytecode, wherein a part or all of the at least one instruction belongs to the modified second bytecode, and the target second bytecode is obtained by patching the part or all of the at least one instruction in the second bytecode after transfer; and when a part of the at least one instruction belongs to the third bytecode, the target third bytecode is obtained by patching the part of the at least one instruction in the third bytecode; or when the at least one instruction does not belong to the third bytecode, the target third bytecode is the third bytecode.

11. The apparatus according to claim 10, wherein the source code is Java source code, and the first-type modification content comprises at least one of the following: an added method, a method with a modified signature, a method with a modifier added, a method with a modifier deleted, an added lambda expression, a lambda expression with a modified body, an added inner anonymous class, or a modified inner anonymous class.

12. The apparatus according to claim 10 or 11, wherein the at least one instruction comprises a first instruction, the at least one piece of content comprises first content, the first content belongs to the first-type modification content, the first instruction is used to invoke the first content in the second bytecode, and the patched first instruction is used to invoke the first content in the third bytecode.

13. The apparatus according to any one of claims 10 to 12, wherein the at least one instruction comprises a second instruction, the second instruction belongs to the third bytecode, the at least one piece of content comprises a first field value, and the second instruction is used to invoke the first field value in the second bytecode; and the patching module is specifically configured to:
generate a first method and a second method in the third bytecode, wherein the first method is used to access the first field value in the second bytecode after transfer by using a reflection mechanism, and the second method is used to read the first field value; and
patch the second instruction, so that the patched second instruction is used to invoke the second method.

14. The apparatus according to any one of claims 10 to 13, wherein the first-type modification content comprises a third method with a modifier added or a third method with a modifier deleted, the modifier is a static modifier, a modifier of the third method in the target second bytecode is the same as a modifier of the third method in the first bytecode, and a method body of the third method in the target second bytecode indicates to invoke the third method in the third bytecode.

15. The apparatus according to any one of claims 10 to 14, wherein the first-type modification content comprises a fourth method with a modifier added, and the modifier is a synchronized modifier; and
the generation module is specifically configured to:
transfer a declaration of the unsynchronized fourth method to the third bytecode, wherein
a modifier of the fourth method in the target second bytecode comprises the synchronized modifier, a method body of the fourth method in the target second bytecode indicates to invoke the synchronized fourth method in the third bytecode, and the synchronized fourth method is implemented based on a synchronization tool.

16. The apparatus according to any one of claims 10 to 15, wherein the first-type modification content comprises a fifth method with a modifier deleted, the modifier is a synchronized modifier, a modifier of the fifth method in the target second bytecode does not comprise the synchronized modifier, and a method body of the fifth method in the target second bytecode indicates to invoke the fifth method in the third bytecode.

17. The apparatus according to any one of claims 10 to 16, wherein the first-type modification content comprises a sixth method with a modified signature, a signature of the sixth method in the target second bytecode is the same as a signature of the sixth method in the first bytecode, and a method body of the sixth method in the target second bytecode indicates to throw an unsupported exception.

18. The apparatus according to any one of claims 10 to 17, wherein the source code is the Java source code, an instruction in second-type modification content in the target second bytecode indicates to throw an unsupported exception, and the second-type modification content comprises at least one of the following: a deleted method, a deleted lambda expression, or a deleted inner anonymous class.

19. A computing device cluster, comprising at least one computing device, wherein each computing device comprises a processor and a memory; and
a processor of the at least one computing device is configured to execute instructions stored in a memory of the at least one computing device, to enable the computing device cluster to perform the method according to any one of claims 1 to 9.

20. A computer-readable storage medium, comprising computer program instructions, wherein when the computer program instructions are executed by a computing device cluster, the computing device cluster performs the method according to any one of claims 1 to 9.

21. A computer program product comprising instructions, wherein when the instructions are run by a computing device cluster, the computing device cluster is enabled to perform the method according to any one of claims 1 to 9.
